# EUROPÄISCHE PATENTSCHRIFT

(11) **EP 3 396 799 B1**
(45) Veröffentlichungstag und Bekanntmachung des Hinweises auf die Patenterteilung: **06.11.2019**
(21) Anmeldenummer: 18164126.7
(22) Anmeldetag: 27.03.2018
(51) Int. Cl.: H02G 3/22, H02B 1/54, F16L 5/02

(54) **DURCHFÜHRUNGSEINRICHTUNG**
LEAD THROUGH DEVICE
DISPOSITIF DE TRAVERSÉE

(30) Priorität: 27.04.2017 DE 102017207095
(43) Veröffentlichungstag der Anmeldung: 31.10.2018
(73) Patentinhaber: Siemens Aktiengesellschaft, 80333 München (DE)
(72) Erfinder: Heidrich, Dieter, 63505 Langenselbold (DE); Kopanoudis, Antonios, 91058 Erlangen (DE); Sachsamanoglou, Faidon, 91052 Erlangen (DE); von Seck, Achim, 91341 Röttenbach (DE)

(56) Entgegenhaltungen:
- DE-A1- 3 211 089
- DE-U- 1 949 270
- KR-B1- 101 415 085
- KR-B1- 101 620 065

## Beschreibung

Die Erfindung bezieht sich auf eine Durchführungseinrichtung zum Halten einer Leitung, insbesondere einer elektrischen Leitung, in einer Wandöffnung einer Wand, insbesondere Gebäudewand.

Eine Vorrichtung zur erdbebensicheren Durchführung eines elektrischen Kabels ist aus der KR 101 620 065 B1 bekannt.

Der Erfindung liegt die Aufgabe zugrunde, eine Durchführungseinrichtung anzugeben, die auch im Falle einer Relativbewegung zwischen Wand und Leitung, beispielsweise im Falle eines Erdbebens, die Leitung zuverlässig hält.

Diese Aufgabe wird erfindungsgemäß durch eine Durchführungseinrichtung mit den Merkmalen gemäß Patentanspruch 1 gelöst. Vorteilhafte Ausgestaltungen der erfindungsgemäßen Durchführungseinrichtung sind in Unteransprüchen angegeben.

Danach ist erfindungsgemäß vorgesehen, dass die Durchführungseinrichtung ein Halteelement mit einem Durchgangsloch, durch das die Leitung hindurchführbar ist, sowie einen äußeren Rahmen aufweist, in dessen Rahmeninneren das Halteelement mittels mindestens einer Federeinrichtung federnd gehalten wird.

Ein wesentlicher Vorteil der erfindungsgemäßen Durchführungseinrichtung ist darin zu sehen, dass die Leitung innerhalb des Rahmens federnd gehalten wird, so dass Relativbewegungen zwischen Leitung und Rahmen durch die mindestens eine Federeinrichtung aufgefangen werden können.

Die Durchführungseinrichtung ist vorzugsweise zum Durchführen einer elektrischen Leitung geeignet.

Erfindungsgemäß bilden zwei benachbarte Federeinrichtungen der Durchführungseinrichtung eine Anbindungseinheit, bei der die zwei Federeinrichtungen jeweils mit ihrem ersten Ende an dem Halteelement und mit ihrem zweiten Ende an dem Rahmen befestigt sind.

Der Winkel zwischen den Längsrichtungen der zwei benachbarten Federeinrichtungen der Anbindungseinheit liegt vorzugsweise zwischen 40° und 50° und beträgt besonders bevorzugt 45°. Durch eine solche Winkelbildung wird in besonders einfacher Weise eine sehr große Beweglichkeit des Halteelements innerhalb des äußeren Rahmens erreicht.

Die Federeinrichtungen sind vorzugsweise axial entlang ihrer Längsrichtung federnde Federeinrichtungen. Besonders vorteilhaft ist es, wenn die Federeinrichtungen Ringfedern sind.

Erfindungsgemäß sind die beiden ersten Enden beabstandet zueinander und definieren eine erste Strecke, und die beiden zweiten Enden sind beabstandet zueinander und definieren eine zweite Strecke, und der Winkel zwischen den Richtungsvektoren der beiden Strecken liegt zwischen 80° und 110°.

Der Winkel zwischen den Richtungsvektoren, die die Richtung der beiden Strecken definieren, beträgt besonders bevorzugt 90 Grad.

Die erste Strecke ist in der Rahmenebene des Rahmens oder parallel zu dieser angeordnet.

Die zweite Strecke ist senkrecht zur Rahmenebene des Rahmens angeordnet.

Erfindungsgemäß ist das Halteelement an zumindest zwei gegenüberliegenden Rändern jeweils mit zwei oder mehr beabstandet zueinander angeordneten Anbindungseinheiten an dem Rahmen befestigt. Das Durchgangsloch liegt geeigneterweise zwischen den zwei gegenüberliegenden Rändern.

Bei einer ersten besonders bevorzugten Ausgestaltung ist vorgesehen, dass das Halteelement an zwei einander gegenüberliegenden Rändern, nachfolgend erster und zweiter Rand genannt, jeweils mit zwei oder mindestens zwei beabstandet zueinander angeordneten Anbindungseinheiten an dem Rahmen befestigt ist und das Halteelement an zwei weiteren einander gegenüberliegenden Rändern, nachfolgend dritter und vierter Rand genannt, jeweils mit einer, insbesondere einer einzigen, Federeinrichtung an dem Rahmen befestigt ist.

Vorteilhaft ist es, wenn die Längsrichtung der am dritten und vierten Rand angebrachten Federeinrichtungen parallel zu der fiktiven Verbindungslinie zwischen den halteelementseitigen Anbindungspunkten der am ersten Rand angebrachten Anbindungseinheiten und parallel zu der fiktiven Verbindungslinie zwischen den halteelementseitigen Anbindungspunkten der am zweiten Rand angebrachten Anbindungseinheiten angeordnet ist.

Die fiktive Verbindungslinie zwischen der am dritten Rand angebrachten Federeinrichtung und der am vierten Rand angebrachten Federeinrichtung verläuft bevorzugt durch das Durchgangsloch in dem Haltelement, insbesondere durch dessen Mittelpunkt.

Bei einer zweiten besonders bevorzugten Ausgestaltung ist vorgesehen, dass das Halteelement ausschließlich an dem ersten und zweiten Rand mit zwei oder mindestens zwei beabstandet zueinander angeordneten Anbindungseinheiten an dem Rahmen befestigt ist. Im Gegensatz zu der ersten besonders bevorzugten Ausgestaltung fehlen bei der zweiten besonders bevorzugten Ausgestaltung Federeinrichtungen an anderen Rändern, insbesondere am dritten und vierten Rand. Die Befestigung des Halteelements erfolgt also nur am ersten und zweiten Rand.

Das Halteelement ist vorzugsweise durch eine in der Draufsicht gesehen quadratische oder rechteckförmige Platte gebildet. Die Plattenebene ist vorzugsweise winklig zur Rahmenebene bzw. Ebene des Rahmeninneren angeordnet.

Der dritte und vierte Rand sind vorzugsweise senkrecht zum ersten und zweiten Rand angeordnet.

Die Erfindung bezieht sich darüber hinaus auf ein Gebäude mit einer in einer Wandöffnung einer Gebäudewand montierten Durchführungseinrichtung, die eine durch die Wandöffnung hindurchgeführte Leitung hält. Erfindungsgemäß ist die Durchführungseinrichtung so wie oben erläutert ausgestaltet. Bezüglich der Vorteile und vorteilhafter Ausgestaltungen des erfindungsgemäßen Gebäudes gelten die obigen Erläuterungen im Zusammenhang mit der erfindungsgemäßen Durchführungseinrichtung und deren vorteilhafter Ausgestaltungen entsprechend. Die durchgeführte Leitung ist vorzugsweise eine elektrische Leitung.

Die Erfindung wird nachfolgend anhand von Ausführungsbeispielen näher erläutert; dabei zeigen beispielhaft
- Figur 1: in einer Draufsicht ein erstes Ausführungsbeispiel für eine Durchführungseinrichtung, die zum Halten einer elektrischen Leitung in einer Wandöffnung einer Wand geeignet ist,
- Figur 2: die Durchführungseinrichtung gemäß Figur 1 in einem Querschnitt,
- Figur 3: die Durchführungseinrichtung gemäß Figur 1 in einem anderen Querschnitt,
- Figur 4: die Durchführungseinrichtung gemäß den Figuren 1 bis 3 in einer dreidimensionalen Darstellung schräg von der Seite, nachdem durch ein Halteelement der Durchführungseinrichtung eine elektrische Leitung hindurchgeführt worden ist, und
- Figur 5: ein zweites Ausführungsbeispiel für eine erfindungsgemäße Durchführungseinrichtung.

In den Figuren werden der Übersicht halber für identische oder vergleichbare Komponenten stets dieselben Bezugszeichen verwendet.

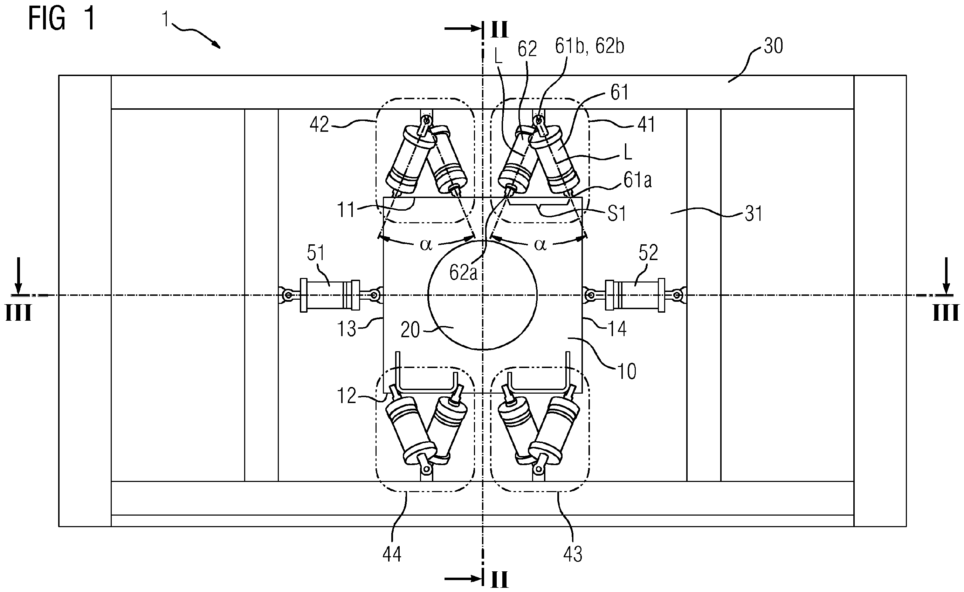

Die Figur 1 zeigt eine Durchführungseinrichtung 1, die zum Halten einer in der Figur 1 nicht gezeigten elektrischen Leitung in einer Wandöffnung einer in der Figur 1 ebenfalls nicht gezeigten Wand geeignet ist. Die Durchführungseinrichtung 1 umfasst ein Halteelement 10, das mit einem Durchgangsloch 20 versehen ist. Durch das Durchgangsloch 20 kann die elektrische Leitung hindurchgeführt werden, diese würde sich bei der Darstellung gemäß Figur 1 senkrecht zur Bildebene durch das Durchgangsloch 20 hindurch erstrecken.

Das Halteelement 10 wird im Rahmeninneren 31 eines äußeren Rahmens 30 der Durchführungseinrichtung 1 federnd gehalten. Der Rahmen 30 ist zur Montage in einer Wandöffnung geeignet und außenrandseitig entsprechend ausgebildet.

Zum federnden Halten des Halteelements 10 innerhalb des Rahmeninneren 31 sind bei dem Ausführungsbeispiel gemäß Figur 1 vier Anbindungseinheiten 41, 42, 43, 44 sowie zwei einzelne Federeinrichtungen 51 und 52 vorgesehen.

Die vier Anbindungseinheiten 41, 42, 43 und 44 sind vorzugsweise baugleich, die nachfolgenden Ausführungen bezüglich eines vorteilhaften Aufbaus der Anbindungseinheit 41 gelten somit für die Anbindungseinheiten 42, 43 und 44 entsprechend.

In der Figur 1 lässt sich erkennen, dass die Anbindungseinheit 41 zwei benachbarte Federeinrichtungen 61 und 62 umfasst, die ein winkliges Federeinrichtungspaar bilden. Der Winkel α zwischen den Längsrichtungen L der zwei benachbarten Federeinrichtungen 61 und 62 der Anbindungseinheit 41 beträgt vorzugsweise 45° bzw. näherungsweise 45°.

Die zwei benachbarten Federeinrichtungen 61 und 62 sind jeweils mit einem ersten Ende 61a bzw. 62a am Halteelement 10 und mit ihrem zweiten Ende 61b bzw. 62b am Rahmen 30 befestigt.

Die Figur 1 zeigt außerdem, dass die beiden ersten Enden 61a und 62a der beiden Federeinrichtungen 61 und 62 beabstandet zueinander sind und eine erste Strecke S1 definieren. Die Strecke S1 bzw. deren Richtungsvektor liegt in der Rahmenebene des Rahmens 30 bzw. in der Ebene des Rahmeninneren 31.

Die beiden zweiten Enden 61b und 62b der beiden Federeinrichtungen 61 und 62 sind ebenfalls beabstandet zueinander und bilden eine zweite Strecke, die senkrecht zur Bildebene in Figur 1 verläuft und aus diesem Grunde in der Figur 1 nicht erkennbar ist.

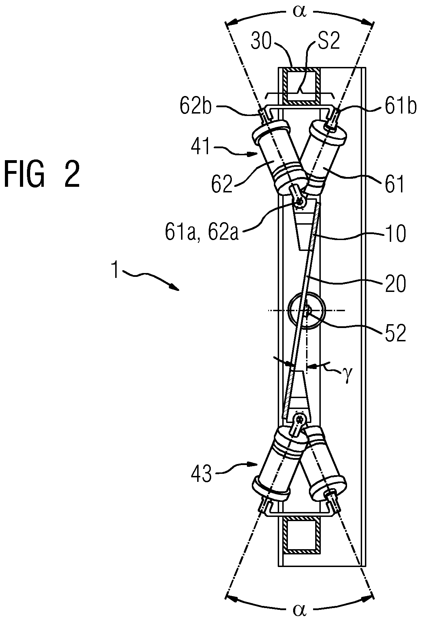

Die Figur 2 zeigt die Durchführungseinrichtung 1 in einem Querschnitt entlang der Schnittlinie II-II. Man erkennt die Anbindungseinheit 41 mit den beiden im Zusammenhang mit der Figur 1 bereits erläuterten Federeinrichtungen 61 und 62. Wie bereits im Zusammenhang mit der Figur 1 erläutert, sind die zwei benachbarten Federeinrichtungen 61 und 62 winklig zueinander angeordnet, und zwar derart, dass der Winkel zwischen den Längsrichtungen L der zwei benachbarten Federeinrichtungen 61 und 62 der Anbindungseinheit 41 45° oder zumindest näherungsweise 45° beträgt. Durch die Anordnung der Federeinrichtungen 61 und 62 wird bewirkt, dass sich die Längsrichtungen L der beiden Federeinrichtungen jeweils aus der Rahmenebene des Rahmens 30 in entgegengesetzte Richtungen winklig heraus erstrecken. Aus diesem Grunde liegen die zweiten Enden 61b und 62b der beiden Federeinrichtungen 61 und 62 auf verschiedenen Seiten außerhalb der Rahmenebene und bilden eine zweite Strecke S2, deren Richtungsvektor senkrecht oder zumindest näherungsweise senkrecht zur Rahmenebene des Rahmens 30 und damit senkrecht oder zumindest näherungsweise senkrecht zum Richtungsvektor der ersten Strecke S1 liegt (vgl. Figur 1).

In der Figur 2 lässt sich darüber hinaus erkennen, dass die Halteplatte 10 vorzugsweise durch eine Platte gebildet ist, deren Plattenebene nicht zwingend in der Rahmenebene des Rahmens 30 bzw. parallel zur Rahmenebene liegt. Vielmehr ist es vorteilhaft, wenn die Plattenebene des Halteelements 10 winklig zur Rahmenebene liegt (vgl. Winkel γ).

Wieder zurückkommend auf Figur 1 lässt sich erkennen, dass die vier Anbindungseinheiten 41 bis 44 vorzugsweise paarweise angeordnet sind, und zwar derart, dass zwei der Anbindungseinheiten, nämlich die Anbindungseinheiten 41 und 42, einen ersten Rand 11 des Halteelements 10 mit dem Rahmen 30 und die zwei Anbindungseinheiten 43 und 44 den gegenüberliegenden zweiten Rand 12 des Halteelements 10 mit dem Rahmen 30 verbinden.

Die einzelnen Federeinrichtungen 51 und 52 verbinden jeweils einen dritten Rand 13 und einen dem dritten Rand 13 gegenüberliegenden vierten Rand 14 mit dem Rahmen 30.

Bei den Federeinrichtungen 61 und 62 der vier Anbindungseinheiten 41-44 und bei den beiden einzelnen Federeinrichtungen 51 und 52 handelt es sich vorzugsweise um axiale Ringfedern.

Wird das Halteelement 10 durch eine Platte gebildet, wie dies im Zusammenhang mit der Figur 2 gezeigt ist, so ist es vorteilhaft, wenn die Platte quadratisch oder rechteckförmig ist und der dritte und vierte Rand 13 bzw. 14 senkrecht zum ersten und zweiten Rand 11 bzw. 12 angeordnet sind. Die fiktive Verbindungslinie zwischen der am dritten Rand 13 angebrachten Federeinrichtung 51 und der am vierten Rand 14 angebrachten Federeinrichtung 52 verläuft vorzugsweise durch das Durchgangsloch 20 im Halteelement 10, und zwar besonders bevorzugt durch dessen Mittelpunkt.

Darüber hinaus ist es vorteilhaft, wenn die Längsrichtung der am dritten und vierten Rand 13 bzw. 14 angebrachten Federeinrichtungen 51 und 52 sowohl parallel zu der fiktiven Verbindungslinie zwischen den halteelementseitigen Anbindungspunkten der am ersten Rand 11 angebrachten Anbindungseinheiten 41 und 42 als auch parallel zu der fiktiven Verbindungslinie zwischen den halteelementseitigen Anbindungspunkten der am zweiten Rand 12 angebrachten Anbindungseinheiten 43 und 44 ist.

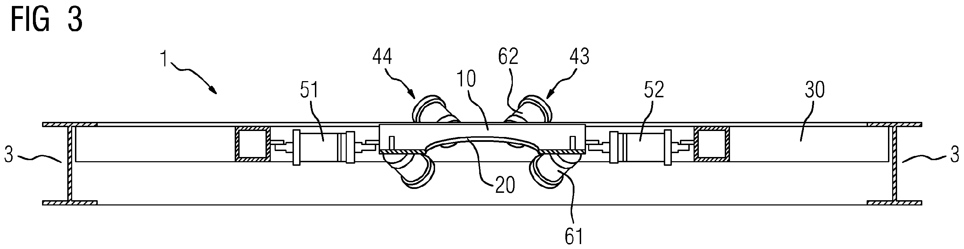

Die Figur 3 zeigt die Durchführungseinrichtung 1 gemäß den Figuren 1 und 2 nochmals in einem anderen Schnitt entlang der Schnittlinie III-III gemäß Figur 1. Man erkennt die zwei Anbindungseinheiten 43 und 44, die den zweiten Rand 12 am Rahmen 30 halten, sowie die beiden einzelnen Federeinrichtungen 51 und 52, deren Längsrichtungen koaxial auf einer Linie angeordnet sind, die in der Rahmenebene des Rahmens 30 liegt.

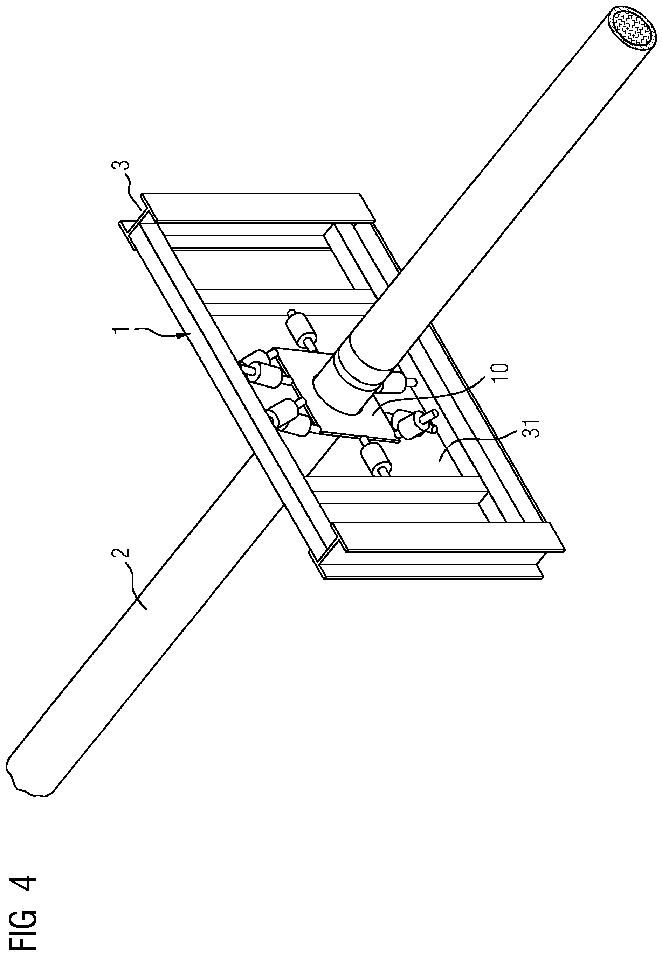

Die Figur 4 zeigt die Durchführungseinrichtung 1 gemäß den Figuren 1 bis 3 in einer dreidimensionalen Darstellung schräg von der Seite, nachdem eine elektrische Leitung 2 durch das Durchgangsloch 20 im Halteelement 10 hindurchgeführt worden ist. Im Falle von Erschütterungen oder Bewegungen, sei es der elektrischen Leitung 2 oder einer Wand 3, insbesondere einer Gebäudewand, die die Durchführungseinrichtung 1 trägt, können Relativbewegungen zwischen der Wand 3 und der elektrischen Leitung 2 durch die Federeinrichtungen, die das Halteelement 10 im Rahmeninneren 31 federnd halten, ausgeglichen werden.

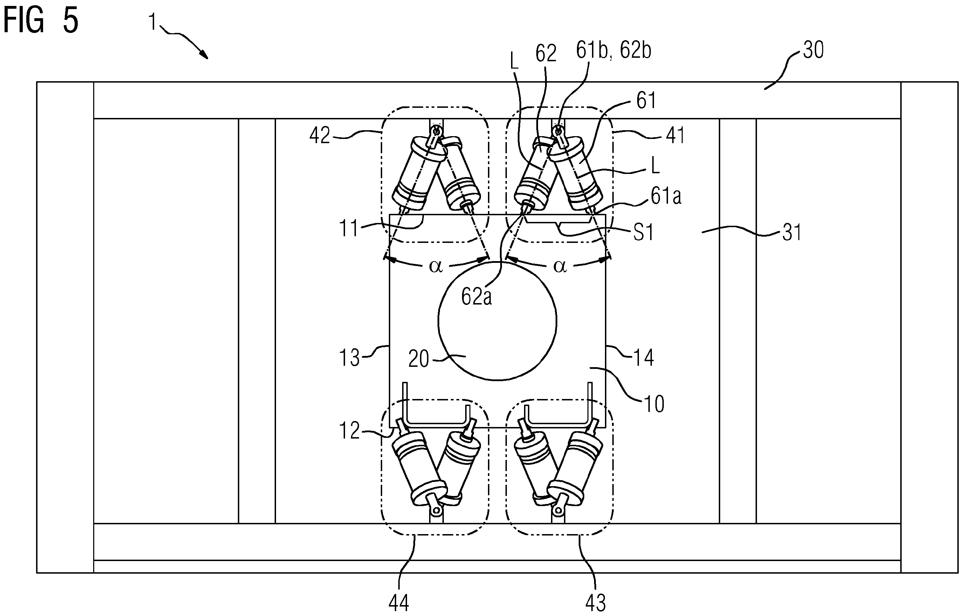

Die Figur 5 zeigt ein zweites Ausführungsbeispiel für eine Durchführungseinrichtung 1, die zum Halten einer elektrischen Leitung in einer Wandöffnung einer Wand 3 (vgl. Figur 4) geeignet ist. Die Durchführungseinrichtung 1 gemäß Figur 5 entspricht im Wesentlichen der Durchführungseinrichtung 1, die im Zusammenhang mit den Figuren 1 bis 4 oben erläutert worden ist. Im Unterschied zu dem Ausführungsbeispiel gemäß den Figuren 1 bis 4 sind bei der Durchführungseinrichtung 1 gemäß Figur 5 lediglich Anbindungseinheiten 41-44 mit jeweils zwei benachbarten Federeinrichtungen zum Halten des Halteelements 10 innerhalb des Rahmeninneren 31 vorgesehen. Einzelne Federeinrichtungen 51 und 52 am dritten Rand 13 und vierten Rand 14 fehlen bei der Durchführungseinrichtung 1. Die Anordnung und Funktionsweise der vier Anbindungseinheiten 41 bis 44 ist mit der Anordnung und Funktionsweise der vier Anbindungseinheiten 41 bis 44 bei der Durchführungseinrichtung 1 gemäß den Figuren 1 bis 4 identisch, so dass auf die obigen Ausführungen verwiesen sei, die hier entsprechend gelten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Durchführungseinrichtung
- 2: Leitung
- 3: Wand
- 10: Halteelement, Halteplatte
- 11: Rand
- 12: Rand
- 13: Rand
- 14: Rand
- 20: Durchgangsloch
- 30: Rahmen
- 31: Rahmeninneres
- 41: Anbindungseinheit
- 42: Anbindungseinheit
- 43: Anbindungseinheit
- 44: Anbindungseinheit
- 51: Federeinrichtung
- 52: Federeinrichtung
- 61: Federeinrichtung
- 61a: Ende
- 61b: Ende
- 62: Federeinrichtung
- 62a: Ende
- 62b: Ende

- L: Längsrichtung
- S1: Strecke
- S2: Strecke
- α: Winkel
- γ: Winkel

## Patentansprüche

1. Durchführungseinrichtung (1) zum Halten einer Leitung (2) in einer Wandöffnung einer Wand (3), insbesondere Gebäudewand, wobei die Durchführungseinrichtung (1) ein Halteelement (10) mit einem Durchgangsloch (20), durch das die Leitung (2) hindurchführbar ist, sowie einen äußeren Rahmen (30) aufweist, in dessen Rahmeninneren (31) das Halteelement (10) mittels mindestens einer Federeinrichtung (51, 52, 61, 62) federnd gehalten wird,
**dadurch gekennzeichnet, dass** zwei benachbarte Federeinrichtungen (61, 62) der Durchführungseinrichtung (1) eine Anbindungseinheit (41-44) bilden, bei der die zwei Federeinrichtungen (61, 62) jeweils mit ihrem ersten Ende (61a, 62a) an dem Halteelement (10) und mit ihrem zweiten Ende (61b, 62b) an dem Rahmen (30) befestigt sind, wobei
- die beiden ersten Enden (61a, 62a) beabstandet zueinander sind und eine erste Strecke (S1) definieren und
- die beiden zweiten Enden (61b, 62b) beabstandet zueinander sind und eine zweite Strecke (S2) definieren und
der Winkel zwischen den Richtungsvektoren der beiden Strecken zwischen 80° und 110° liegt, wobei die erste Strecke (S1) in der Rahmenebene des Rahmens (30) oder parallel zu dieser angeordnet ist, und die zweite Strecke (S2) senkrecht zur Rahmenebene des Rahmens (30) angeordnet ist, wobei das Halteelement (10) an zwei einander gegenüberliegenden Rändern, nachfolgend erster und zweiter Rand (11, 12) genannt, jeweils mit zwei oder mindestens zwei beabstandet zueinander angeordneten Anbindungseinheiten (41-44) an dem Rahmen (30) befestigt ist.

2. Durchführungseinrichtung (1) nach Anspruch 1,
**dadurch gekennzeichnet, dass**
der Winkel (α) zwischen den Längsrichtungen (L) der zwei benachbarten Federeinrichtungen (61, 62) der Anbindungseinheit (41-44) zwischen 40° und 50° liegt, insbesondere 45° beträgt.

3. Durchführungseinrichtung (1) nach einem der voranstehenden Ansprüche,
**dadurch gekennzeichnet, dass**
die Federeinrichtungen (61, 62) axial entlang ihrer Längsrichtung (L) federnde Federeinrichtungen (61, 62) sind.

4. Durchführungseinrichtung (1) nach einem der voranstehenden Ansprüche,
**dadurch gekennzeichnet, dass** die Federeinrichtungen (61, 62) Ringfedern sind.

5. Durchführungseinrichtung (1) nach Anspruch 1,
**dadurch gekennzeichnet, dass**
der Winkel zwischen den Richtungsvektoren, die die Richtung der beiden Strecken (S1, S2) definieren, 90 Grad beträgt.

6. Durchführungseinrichtung (1) nach einem der voranstehenden Ansprüche,
**dadurch gekennzeichnet, dass**
- das Halteelement (10) ausschließlich an zwei gegenüberliegenden Rändern (11, 12) an dem Rahmen (30) befestigt ist, und zwar mit jeweils zwei oder mehr beabstandet zueinander angeordneten Anbindungseinheiten (41-44) pro Rand, und
- das Durchgangsloch (20) zwischen den zwei gegenüberliegenden Rändern (11, 12) liegt.

7. Durchführungseinrichtung (1) nach Anspruch 1,
**dadurch gekennzeichnet, dass**
- das Halteelement (10) an zwei weiteren einander gegenüberliegenden Rändern, nachfolgend dritter und vierter Rand (13, 14) genannt, jeweils mit einer, insbesondere einer einzigen, Federeinrichtung (51, 52) an dem Rahmen (30) befestigt ist,
- wobei die Längsrichtung der am dritten und vierten Rand (13, 14) angebrachten Federeinrichtungen (51, 52) parallel zu der fiktiven Verbindungslinie zwischen den halteelementseitigen Anbindungspunkten der am ersten Rand (11) angebrachten Anbindungseinheiten (41-44) und parallel zu der fiktiven Verbindungslinie zwischen den halteelementseitigen Anbindungspunkten der am zweiten Rand (12) angebrachten Anbindungseinheiten (41-44) angeordnet ist.

8. Durchführungseinrichtung (1) nach einem der voranstehenden Ansprüche,
**dadurch gekennzeichnet, dass**
- das Halteelement (10) durch eine in der Draufsicht gesehen quadratische oder rechteckförmige Platte gebildet ist und
- die Plattenebene winklig zur Rahmenebene angeordnet ist.

9. Gebäude mit einer in einer Wandöffnung einer Gebäudewand (3) montierten Durchführungseinrichtung (1), die eine durch
die Wandöffnung hindurch geführte Leitung (2) hält,
**dadurch gekennzeichnet, dass**
die Durchführungseinrichtung (1) eine Durchführungseinrichtung (1) nach einem der voranstehenden Ansprüche ist.

## Claims

1. Leadthrough device (1) for holding a conduit (2) in a wall opening of a wall (3), in particular building wall, wherein the leadthrough device (1) has a holding element (10) with a passage hole (20), through which the conduit (2) can be led, and has an outer frame (30), in the frame interior (31) of which the holding element (10) is held in resilient fashion by means of at least one spring device (51, 52, 61, 62),
**characterized in that**
two adjacent spring devices (61, 62) of the leadthrough device (1) form a connection unit (41-44), in which the two spring devices (61, 62) are fastened in each case by means of their first end (61a, 62a) to the holding element (10) and by means of their second end (61b, 62b) to the frame (30), wherein
- the two first ends (61a, 62a) are spaced apart from one another and define a first distance (S1), and
- the two second ends (61b, 62b) are spaced apart from one another and define a second distance (S2), and
the angle between the direction vectors of the two distances lies between 80° and 110°, wherein the first distance (S1) is arranged in the frame plane of the frame (30) or parallel thereto, and the second distance (S2) is arranged perpendicular to the frame plane of the frame (30), wherein the holding element (10) is fastened at two mutually opposite edges, hereinafter referred to as first and second edges (11, 12), to the frame (30), in each case by means of two or at least two connection units (41-44) arranged spaced apart from one another.

2. Leadthrough device (1) according to Claim 1,
**characterized in that**
the angle (α) between the longitudinal directions (L) of the two adjacent spring devices (61, 62) of the connection unit (41-44) lies between 40° and 50°, and is in particular 45°.

3. Leadthrough device (1) according to one of the preceding claims,
**characterized in that**
the spring devices (61, 62) are spring devices (61, 62) which are resilient axially along their longitudinal direction (L).

4. Leadthrough device (1) according to one of the preceding claims,
**characterized in that**
the spring devices (61, 62) are annular springs.

5. Leadthrough device (1) according to Claim 1,
**characterized in that**
the angle between the direction vectors that define the direction of the two distances (S1, S2) is 90 degrees.

6. Leadthrough device (1) according to one of the preceding claims,
**characterized in that**
- the holding element (10) is fastened exclusively at two opposite edges (11, 12) to the frame (30), specifically by means of in each case two or more connection units (41-44) arranged spaced apart from one another per edge, and
- the passage hole (20) is situated between the two opposite edges (11, 12).

7. Leadthrough device (1) according to Claim 1,
**characterized in that**
- the holding element (10) is fastened at two further mutually opposite edges, hereinafter referred to as third and fourth edges (13, 14), to the frame (30), in each case by means of a, in particular one single, spring device (51, 52),
- wherein the longitudinal direction of the spring devices (51, 52) connected to the third and fourth edges (13, 14) is arranged parallel to the imaginary connecting line between the holding-element-side connection points of the connection units (41-44) connected to the first edge (11) and parallel to the imaginary connecting line between the holding-element-side connection points of the connection units (41-44) connected to the second edge (12).

8. Leadthrough device (1) according to one of the preceding claims,
**characterized in that**
- the holding element (10) is formed by a plate which is square or rectangular as seen in plan view, and
- the plate plane is arranged at an angle with respect to the frame plane.

9. Building having a leadthrough device (1) installed in a wall opening of a building wall (3), which leadthrough device holds a conduit (2) that is led through the wall opening,
**characterized in that**
the leadthrough device (1) is a leadthrough device (1) according to one of the preceding claims.

## Revendications

1. Dispositif (1) de traversée pour maintenir une ligne (2) dans une baie d'un mur (3), notamment d'un mur de bâtiment, le dispositif (1) de traversée ayant un élément (10) de maintien à trou (20) traversant, dans lequel la ligne (2) peut passer, ainsi qu'un cadre (30) extérieur à l'intérieur (31) duquel l'élément (10) de maintien est maintenu élastiquement au moyen d'un dispositif (51, 52, 61, 62) à ressort,
**caractérisé en ce que**
deux dispositifs (61, 62) à ressort voisins du dispositif (1) de traversée forment une unité (41 à 44) de jonction, dans laquelle les deux dispositifs (61, 62) à ressort sont fixés chacun par leur première extrémité (61a, 62a) à l'élément (10) de maintien et par leur seconde extrémité (61b, 62b) au cadre (30), dans lequel
- les deux premières extrémités (61a, 62a) sont à distance l'une de l'autre et définissent un premier segment (S1) et
- les deux secondes extrémités (61b, 62b) sont à distance l'une de l'autre et définissent un second segment (S2) et l'angle entre les vecteurs directeurs des deux segments est compris entre 80° et 110°, le premier segment (S1) étant disposé dans le plan du cadre (30) ou y étant parallèle et le deuxième segment (S2) étant disposé perpendiculairement au plan du cadre (30), l'élément (10) de maintien étant, sur deux bords opposés l'un à l'autre dénommés dans ce qui suit premier et deuxième bords (11, 12), fixé au cadre (30), respectivement, par deux ou au moins deux unités (41 à 44) de jonction à distance l'une de l'autre.

2. Dispositif (1) de traversée suivant la revendication 1,
**caractérisé en ce que**
l'angle (α) entre les directions (L) longitudinales des deux dispositifs (61, 62) à ressort voisins de l'unité (41 à 44) de jonction est compris entre 40° et 50°, en étant notamment de 45°.

3. Dispositif (1) de traversée suivant l'une des revendications précédentes,
**caractérisé en ce que**
les dispositifs (61, 62) à ressort sont des dispositifs (61, 62) à ressort élastiques suivant leur direction (L) longitudinale.

4. Dispositif (1) de traversée suivant l'une des revendications précédentes,
**caractérisé en ce que**
les dispositifs (61, 62) à ressort sont des ressort-bagues.

5. Dispositif (1) de traversée suivant la revendication 1,
**caractérisé en ce que**
l'angle entre les vecteurs directeurs, qui définissent la direction des deux segments (S1, S2), est de 90 degrés.

6. Dispositif (1) de traversée suivant l'une des revendications précédentes,
**caractérisé en ce que**
- l'élément (10) de maintien est fixé au cadre (10), exclusivement sur deux bords (11, 12) opposés, fixé au cadre (10) et cela, par respectivement deux ou plusieurs unités (41 à 44) de jonction disposées à distance les unes des autres par bord, et
- le trou (20) traversant se trouve entre les deux bords (11, 12) opposés.

7. Dispositif (1) de traversée suivant la revendication 1, **caractérisé en ce que**
- l'élément (10) de maintien est, sur deux autres bords opposés l'un à l'autre dénommés dans ce qui suite troisième et quatrième bords (13, 14), fixé au cadre (30), respectivement, par un dispositif (51, 52) à ressort, notamment unique,
- dans lequel la direction longitudinale des dispositifs
(51, 52) à ressort mis sur le troisième et quatrième bords (13, 14) est parallèle à la ligne de liaison fictive entre les points de jonction, du côté de l'élément de maintien, des unités (41 à 44) de jonction mises sur le premier bord et parallèle à la ligne de liaison fictive entre les points de jonction, du côté de l'élément de maintien, des unités (41 à 44) de jonction mises sur le deuxième bord (12).

8. Dispositif (1) de traversée suivant l'une des revendications précédentes,
**caractérisé en ce que**
- l'élément (10) de maintien est formé d'une plaque, considéré en vue en plan, carrée ou rectangulaire et
- le plan de la plaque fait un angle avec le plan du cadre.

9. Bâtiment ayant un dispositif (1) de traversée, qui est monté dans une baie d'un mur (3) du bâtiment et qui maintient une ligne (2) passant dans la baie,
**caractérisé en ce que**
le dispositif (1) de traversée est un dispositif (1) de traversée suivant l'une des revendications précédentes.
